# EUROPEAN PATENT APPLICATION

(11) **EP 2 575 313 A1**
(43) Date of publication of application: **03.04.2013**
(21) Application number: 11182850.5
(22) Date of filing: 27.09.2011
(51) Int. Cl.: H04L 29/06

(54) **Morphing firewall**

(71) Applicant: NorCom Information Technology AG, 80333 München (DE)
(72) Inventor: Hofer, Christian, 90429 Nürnberg (DE); Ramstöck, Horst, 90453 Nürnberg (DE); Fleming, Robert, 90482 Nürnberg (DE)
(74) Representative: Taruttis, Tilman

(57) **Abstract**

A firewall system and corresponding firewall method are described for protecting a trusted network against unauthorized access from an untrusted network. The proposed system provides a plurality of different firewall applications for inspecting data traffic according to rules, wherein one of the firewall applications is active and inspects data exchanged between the networks. The active firewall application is exchanged with another firewall application when a time interval expires or to implement an amended set of rules, thus providing a morphing outer appearance of the firewall system to any attacker.

## Description

The invention relates to a method for and a correspondingly adapted digital processing system for securing a network interface. Particularly the invention relates to a so-called morphing firewall, i.e. a firewall capable of changing its appearance to a network.

In data networks computers communicate by exchanging data via links, wherein the data typically is portioned into packets, and said packets are typically transmitted via a link. A plurality of protocols is known for packaging and transmitting the data from one computer to another. The network may connect a plurality of computers and may comprise a plurality of links between the computers. In one embodiment the network may be the so-called World Wide Web WWW.

To exchange data, which in one embodiment may be web site data, via a data network a first requesting computer, i.e. a client, connects to a second, serving computer, on which the desired data is stored. The requesting computer for example may use so-called browser program for requesting and displaying the desired data. A program running on the serving computer, which may be a web server program, enables access to the desired data stored on the serving computer. Said serving program binds to or opens a so-called port, which in combination with the unique address, i.e. the URL, identifies the address of the serving program, to which an access request can be sent. The serving program may read the desired data from its storage place and may transmit the requested data to the requesting computer. The request data transmitted from the client to the server as well as the response data may be formatted according to any of a plurality of per se known protocols.

It is known that an invader may attack a computer via its network interface for example to gain unauthorized access to the computer. Said unauthorized access may be used to gain control of the computer or to gain unauthorized and undesired access to data.

To prevent unauthorized access to a computer a so-called firewall can be used. Typically a firewall is a software application executed on a computer. Said firewall application may be executed on the computer to be protected, or the firewall application is executed on a separate computer, which couples the computer or a network to protect to an untrusted network to enable communication between the trusted and the untrusted computers or networks to enable communication between the trusted and untrusted network/computer. In the following description the term firewall shall describe a software application or a system implementing the aforementioned functionality to separate a trusted network from an untrusted network by inspecting the data traffic exchanged between the trusted and untrusted network.

To prevent unauthorized access to the trusted network the firewall inspects the data that shall be exchanged between the networks according to a set of rules, said rules thus defining the inspection of the data.

In one embodiment the firewall system may implement a so-called packet filtering, which basically is performed on the lower three layers of the OSI model. Each packet of data is inspected separately, wherein the firewall checks, if a packet matches the packet filter's set of rules. The check is performed based on that single packet only, i.e. the filtering does not consider if the packet forms part of a bigger file partitioned into a plurality of files. In case that check indicates the packet shall not pass the firewall, the packet may be dropped, i.e. the packet is not forwarded but simply deleted by the firewall, or the packet may be rejected, i.e. the packet is not passed forward, but the firewall returns an error response to the sender of that packet. Said return message may comprise information being characteristic for the firewall.

In an alternative embodiment the firewall filtering may understand applications or protocols and may consider particularities of these. In one embodiment the firewall may accordingly detect if a packet is part of a stream of packets and may furthermore perform more sophisticated checks of the content conveyed in the ingress data packets.

Attacks on firewalls with the intent to bypass or damage a firewall system are known. The sender of a network packet can manipulate a packet in different ways in order to overcome the system. Furthermore it is an open secret that some firewalls, i.e. firewall application products of different vendors, and/or operating systems are prone to different types of attacks. Known examples of vulnerabilities are so-called buffer overflows, which enable the unauthorized execution of transmitted data, i.e. executable code, or the abuse of programming flaws or errors of setting up or configuring a firewall application. An attacker may accordingly try to identify a targeted firewall and then make use of the vulnerabilities of the identified system to exploit a known vulnerability of the identified firewall system.

The race between developing improved firewall applications and finding vulnerabilities thus requires improving the concept of protecting a computer using a firewall system.

The objects and features of the invention are described in the following with reference to the attached drawings wherein
- Fig. 1: depicts a schematic of the invention;
- Fig. 2: depicts method steps of exchanging an active firewall application;
- Fig. 3: depicts method steps of analyzing firewall applications;
- Fig. 4: depicts method steps of configuring firewall applications;
- Fig. 5: depicts an embodiment of a firewall system architecture.

In the following a method and a corresponding computer system adapted and configured for protecting a computer or a trusted network from unauthorized access is described. In order to not unnecessarily obscure the following description it is assumed that the method and corresponding computer system are located between a trusted network, which in the following may be an intranet, and an untrusted network, which in the following may be the Internet. Note that the method and corresponding computer system shall not be limited in this regard, since the method and corresponding computer system can be located between two single computers or between a single computer and a network.

Note that in the context of the present invention the term "computer" can include a present-day traditional, stand-alone computer, as well as any other intelligent device capable of receiving and transmitting data over a network interface. Also, the invention may be implemented completely in software, wherein the software modules can be executed on any of the aforementioned computer or the invention may be partially implemented in hardware and partially in software or fully in hardware.

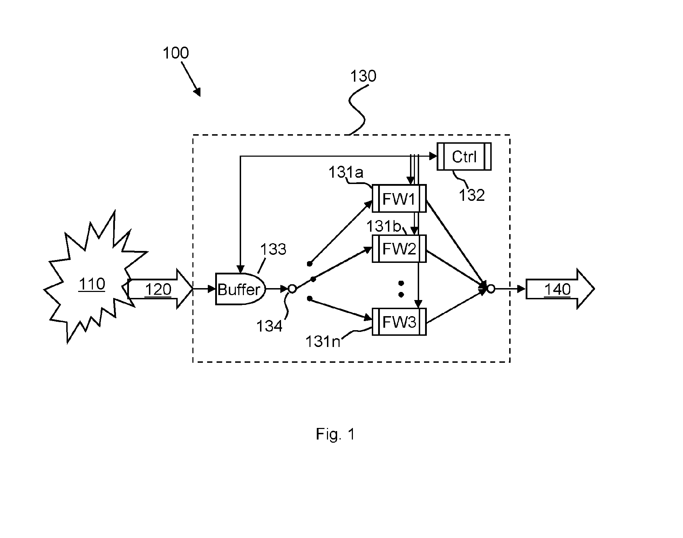

Figure 1 depicts a schematic diagram 100 illustrating the basic functionality of the proposed firewall system for checking incoming data packets. From first network 110, i.e. an untrusted network, a stream of ingress data 120 is transmitted to a firewall system 130, which checks ingress data 120 and outputs an egress data stream 140, which may be passed to second network 150, i.e. a trusted network. Note that in one embodiment first network 110 may be the Internet and second network 150 may be a home or office or company intranet. However, in an alternative embodiment the system may check a data stream originating from a trusted network, i.e. system 130 may check an egress data stream of a trusted network to check for suspicious data that may indicate an undesired situation in the trusted network.

Note that the stream of ingress data 120 and/or the stream of egress data 140 may be packetized. In one embodiment the in- and egress data may be packetized according to any well known protocol, i.e. such as TCP/IP or udp or ftp or the like.

Non-public, trusted networks are typically separated from a publicly accessible network by a firewall application to protect said trusted network from unauthorized access. In one embodiment an invader may transmit a data packet to a particular port and thus to a particular software application listening for ingress data on that port, wherein the processing of the data conveyed in said at least one packet may enable said unauthorized access due to an faulty processing of the data in the software application receiving said data. A faulty processing of data by a process that may lead to providing unauthorized access to an invader is called an exploit.

A firewall system may return an informal message to the sender of a data packet in case an inspection of the received data packet reveals that according to the set or rules the data packet is rejected, i.e. the firewall does not forward the data packet. These informal messages are intended to inform the sender about the rejection of his data. However these informal messages may comprise data characteristic for the specific protection system, since the informal return messages may exhibit properties characteristic of different firewall applications. An invader may gather information about a firewall system by intentionally transmitting data packets to the system wherein the data packets will not be processed, thus provoking messages returned from the aimed system, which the invader may use as a fingerprint to identify the firewall system.

The gathered information may then serve as a basis for determining detail information about the firewall system, i.e. the behaviour of the firewall system depending on transmitted data content and/or depending on the format of the transmitted data and so on. In one embodiment an invader may use the return messages to exactly identify the firewall system in order to use a known exploit of the protection system. In another embodiment an invader may use the return messages to analyze the behaviour of firewall system in order to detect an exploit that could be used to corrupt the firewall system. However disabling the transmission of informal messages to the sender of an unprocessed packet theoretically is an option. Most of the data that cannot be processed in firewall system is transmitted with the intention to be processed correctly. So by returning informal messages to these senders the firewall system helps them to identify that the transmission was not successful. Omitting the return messages might cause problems for the senders as well as for the firewall system, since the senders may repeat or continue to transmit data thus causing huge network load and thus slowing down the network interface.

However, in order to complicate the gathering of information about the firewall system for dishonest transmitters, system 130 may be adapted and configured to modify its outer behaviour, i.e. the firewall system may at least modify its outer appearance as perceivable from the untrusted network side. In this way the collection of fingerprint data of a firewall system is at least complicated while at the same time maintaining transmission of return messages to senders of unprocessed data can be maintained.

This is achieved by a firewall system 130 comprising a plurality of at least two firewall applications 131a...131n. The plurality of firewall applications are executed at the same time, but only one of the plurality of firewall applications is active, i.e. the active firewall application processes ingress data. Said active firewall application can be replaced with another firewall application of said plurality of simultaneously executed firewall applications.

As depicted in figure 1 firewall system 130 comprises firewall applications 131 a, 131b...131n, thus providing a plurality of firewall applications. Said entirety of firewall applications is denoted 131 in the following and a single firewall application of the plurality of applications is denoted by 131 a or 131 b .., i.e. including a letter.

In addition to the plurality of firewall applications, firewall system 130 comprises a control block 132. Each of the firewall applications 131 a...131 n is communicatively coupled to control block 132 and may communicate with control block 132. Control block 132 accordingly may control each of the firewall applications and each of the firewall applications may transmit messages to control block 312.

Furthermore firewall system 130 may optionally comprise a buffer 133 for buffering ingress data. Buffer 133 may be controlled by control block 132 as indicated by the connection from buffer 133 to control block 132.

During operation ingress data stream 120 is transmitted from untrusted network 110 to firewall system 130. As mentioned above said stream of ingress data may be of any format and particularly may be packetized thus forming a stream of ingress data packets. Upon entering firewall system 130 said ingress data optionally may be buffered in buffer 133, alternatively the buffer may be switched off or bypassed. The ingress data stream is then forwarded to and processed by an active firewall application, which in fig. 1 is firewall 131 b. The active firewall inspects all packets of the ingress data according to a set of provided rules. If the active firewall application does not object to the processed ingress data, said data is forwarded for further processing via egress data stream 140.

In case firewall system 130 detects an attack of the system upon inspecting a data packet according to the set of rules, i.e. as described above an attempt to outsmart, circumvent or somehow else to bypass or to outsmart system 130 in order to gain unauthorized access to the firewall system 130 itself or a computer protected by firewall system 130, then system 130 does not forward the inspected data packet and exchanges active, i.e. first , firewall 131 b with another, i.e. second, firewall application of the plurality of firewalls, thus setting said another firewall to be active and to process all ingress data.

Said exchange may be accomplished by controlling the active firewall application to stop processing ingress data. In one embodiment said controlling may be initiated by control block 132, which may communicate a corresponding control message to the active firewall application. Control block 132 furthermore controls another firewall application to start processing of ingress data. In addition control block 132 may control buffer 133 to buffer all ingress data until said another firewall application is ready to process ingress data.

Furthermore control block 132 may use a means for performing said exchange of firewalls applications. In one embodiment said means can be a switch 134 to relay the data stream from buffer 133 to an active firewall. In an alternative embodiment the step of relaying the data stream to an active firewall application can be performed by instructing a previously active firewall application to close, i.e. to disconnect, from a port of the network interface and then to instruct the now active firewall application to open, i.e. to connect to the port to listen to. In this way means 134 may be implemented as a hardware switch or in software, which in one embodiment may be implemented as functions integrated in each firewall application.

Said another firewall application differs from the firewall application being active before the exchange at least in one of the set of rules or its outer appearance as perceivable from the untrusted network side, e.g. its informal messages returned to a sender when a packet is rejected upon inspection according to the set of rules. In this way the fingerprint data, that an invader may try to collect, is altered.

Note that in one embodiment the previously active firewall application may be a first conventional firewall application and the now activated firewall application may be a second conventional firewall application, wherein the first and second firewall application at least differ in at least one property. Said at least one property may be the format of an informal reply sent to a sender in case a data packet is not forwarded to its designated destination when inspected according to the set of rules. Accordingly the first firewall application may be a firewall software product of a first producer and the second firewall may be a firewall software product of another, i.e. second producer, the firewall products thus differing in their properties.

In addition to setting another one of the plurality of firewall applications to active, the set of rules that determine the checking and inspecting of the ingress data may be changed.

In one embodiment the deactivation of the active firewall application and the activation of another firewall application may comprise that said second firewall application is executed by another, i.e. different, operating system. In one embodiment first firewall application may be executed by a Microsoft Windows operating system and the second firewall application may be executed by a Linux or Unix operating system.

Taking into account that the operating system may have a significant impact on the operation and behaviour of a firewall application, only the operating system may be exchanged while the firewall application essentially remains the same, i.e. the firewall software application may be from the same manufacturer, same software version etc but adapted to execute on said second operating system. Accordingly and in still another embodiment the first firewall application, which executes on a first operating system, may be disabled. The second firewall application is activated to process ingress data, wherein said second firewall is a combination of the first firewall application executed on a second operating system. The first firewall application thus may be considered as a combination of first firewall application software and a first operating system, wherein said first firewall application executes on said first operating system, whereas the second firewall application may be formed by said first firewall application and a second operating system, said first firewall application executing on said second operating system. In this way firewall applications and operating systems may be advantageously combined.

In an alternative embodiment or in addition to exchanging the active firewall application when an attack is identified, firewall system 130 may exchange the active firewall, i.e. replace a currently active firewall application with another of the plurality of firewall application based on timing. An active firewall application thus may be replaced not only if an attack has been determined but also if that firewall application has been active for a defined time span, wherein the time span of a firewall application being active may be predefined and fixed or may be defined by a pseudo-random process, thus exchanging the active firewall application after a random time interval. Said exchange of the active firewall application as well as determining a random time interval may be controlled by control block 132.

When said another firewall application has become the active firewall application it processes the ingress data. In case ingress data 120 has been buffered in buffer means 133 the firewall application set to active will process the buffered ingress data.

In this way the firewall system, as it is observable from untrusted network 110, may morph from a first outer appearance to at least one other outer appearance in case of an attack or based on timing.

Firewall system 130 may be implemented using a plurality of functions, modules, processes and applications that may run on a single computer or on a distributed computer system including digital processing means running different operating systems. In particular system 130 may be implemented comprising a plurality of firewall applications, wherein said firewall applications at least differ in one of their properties including fingerprint data perceivable from the untrusted network side.

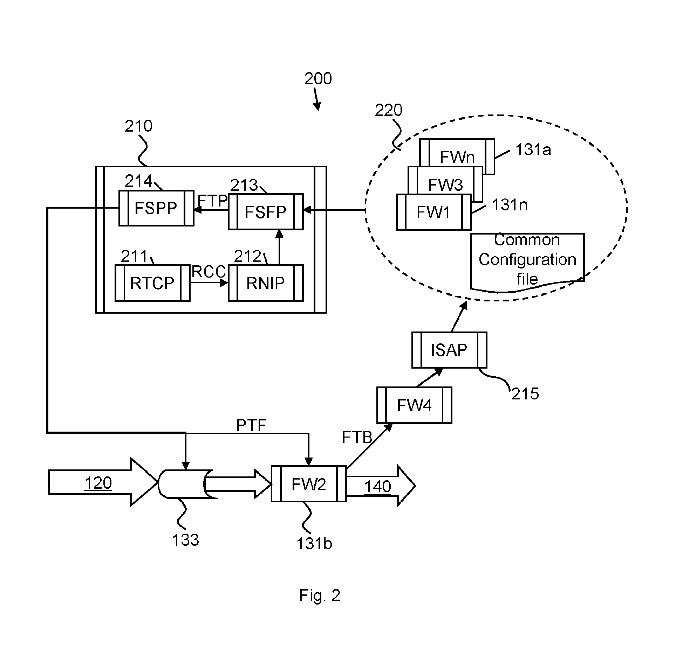

The proposed firewall system can be implemented using a plurality of firewall applications as described in the following with reference to figure 2.

Figure 2 depicts a flowchart 200 illustrating one embodiment of the invention comprising a plurality of firewall applications. A firewall application that processes an ingress data stream is exchanged with another, differing firewall application, i.e. the currently active firewall application is deactivated while nearly at the same time another of the plurality of provided firewall applications is activated.

Firewall system 130 provides a plurality of at least two firewall applications 131 a to 131 n. One of the plurality of firewall applications 131 b currently is the active firewall application, i.e. the firewall application that processes ingress data stream 120. As long as there is an active firewall application in the system, ingress data stream 120 is passed through buffer 133 without delay, i.e. buffer 133 is inactive. The currently active firewall application 131 b accordingly inspects the ingress data according to a currently active set of rules and outputs an egress data stream 140.

As mentioned above the exchange of an active firewall may be triggered by a detected attack of the system, which may be a detected intrusion of system 130 or any other detected suspicious state of the firewall system or by identifying a suspicious data packet upon inspection of said packet. Alternatively the exchange of an active firewall application may be triggered by an expiring time interval, which defines the time span of processing ingress data of a firewall application.

Determining a time interval and triggering the exchange on expiration may be performed by randomizing firewall selection process 210, which in turn may comprise a plurality of processes or functionalities. Note that each of the functionalities described herein may be distributed to a plurality of processes running on a computer system, so the invention described herein may not be limited in this regard. In one embodiment randomizing firewall selection process 210 may comprise a process 211 for generating a time interval of random duration, i.e. a random time and change process RTCP, that defines the time interval a firewall shall process ingress data 120, i.e. the time interval a firewall application is active. When the determined time interval expires, the random time and change process 211 generates a random change command RCC that triggers process 212, i.e. random number and initiate process RNIP, to randomly select one of the available and inactive firewall applications 220. Note that available, inactive firewall applications are configured by a common configuration parameter file, which defines the rules for all firewall applications, the rule set being effectively equal for all firewall applications, as described later on.

Random number and initiate process 212 selects one of the available firewall applications and instructs a frontier system fetch process FSFP 213 to fetch one of the available and currently non-active firewall applications and to further inform by a fetched to put FTP message frontier system put process 214 that a firewall application is prepared for being set active.

Before said selected and fetched firewall application is actually set active, process 214 instructs buffer 133 to buffer, i.e. to delay, ingress data stream 120. Subsequently process 214 controls the currently active firewall application 131 b to stop processing any ingress data and to switch to inactive, i.e. to disconnect from any port that said firewall had listened to. This can be achieved for example by a front-to-back instruction FTB, which sets a currently active firewall application to inactive.

Then the selected firewall application, which was selected from the plurality of available non-active firewall applications, is set to active for example by a put to front command, thus activating said firewall application. The activated firewall application may accordingly open the ports to listen for receiving ingress data. Lastly buffer 133 is instructed to forward buffered ingress data to the now active firewall application, which from then on will process ingress data according to the rule set as specified in the latest and most up-to-date set of rules.

Optionally the now active firewall application may be set to active for at least a minimum time interval to prevent the firewall system from an ongoing chain of exchanging the active firewall application without processing ingress data. Accordingly a minimum time interval may be predefined that defines the minimum time of being active before an active firewall application is deactivated.

A firewall application, which has been set to from active to inactive, is analyzed to detect intrusion or corruption attempts before it is made available as one of the inactive but available firewall applications. After the recently active firewall application has been set to inactive it is analyzed for example by an inactive system analyze process ISAP. Said analyze process 215 may for example check for any differences of the firewall application compared to a firewall application originally defined before it was set to active. Identified differences may be considered as an attempt to invade or to corrupt the firewall system. A corresponding reaction of the firewall system is described later on. In case that analyze process 215 does not identify any suspicious amendments of the firewall application or its configuration, said firewall application may be made available for being selected again.

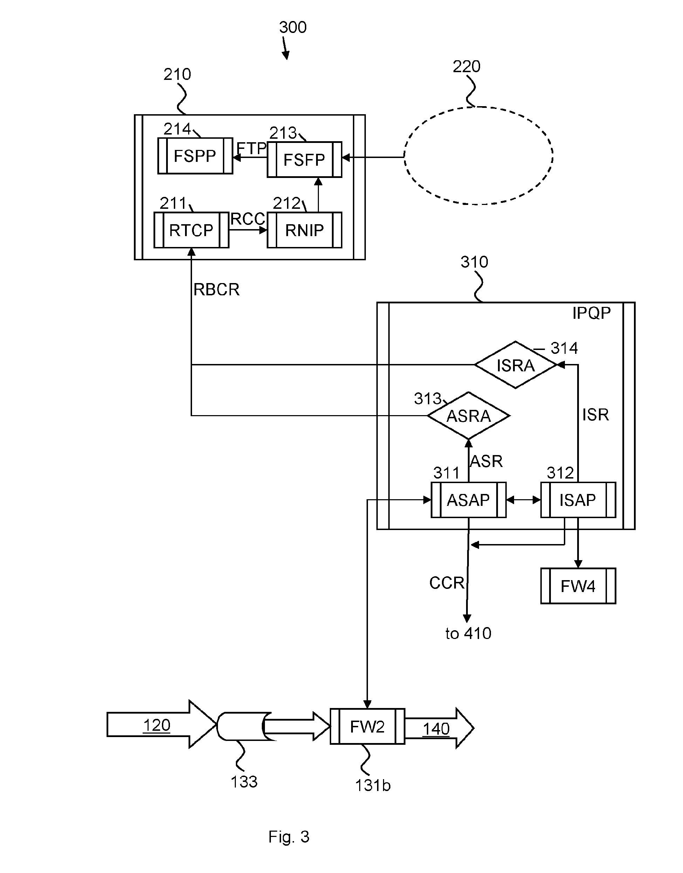

Figure 3 depicts a flowchart 130 illustrating method steps for analyzing an active firewall application, analyzing an inactive firewall application and related method steps for alerting firewall system 130.

To monitor active firewall application 131 b and to analyze an inactive firewall application instantly after being set from active to inactive, the firewall system may comprise an intrusion protection quality process IPQB 310, which in turn may comprise an active system analyze process ASAP 311 and an inactive system analyze process ISAP 312. Active system analyze process 311 analyzes an active firewall, i.e. firewall application 131 b, while that firewall application processes ingress data stream 120. In one embodiment said analyzing may comprise the method step of comparing the rule set actually followed by active firewall application 131 b with the rule set specified for the firewall before being set to active. Said comparison in one embodiment can be achieved by comparing a hash value or checksum of the file with a reference hash value, which has been computed for the original, i.e. reference, file. Any changes found may be considered as an attempt to corrupt the currently active firewall application or as an attempt to break in firewall system 130. Similarly log files, in which an active firewall application may have logged any identified intrusion or corruption or otherwise suspicious situation can be analyzed. In one embodiment the result of analyzing the active firewall application is communicated as an active status report ASR to a procedure , i.e. an active status report analyze procedure ASRA 313, which evaluates the communicated status report and decides whether currently active firewall application 131 b should be replaced by one of the available inactive firewall applications 220. This decision is communicated to the random time and change process RTCP 211, said communication is denoted as result based change request RBCR in fig. 3.

Inactive system analyze process 312 analyzes the firewall application, i.e. FW4 in fig. 3, which recently has been set from active to inactive. In one embodiment said step of analyzing comprises comparing the set of rules that said firewall application followed when active with a set or rules provided to said firewall application when setting said firewall application from inactive to active. In one embodiment said comparison can be performed by comparing a hash value or checksum. In this way any amendments relating to the set of rules can be identified. Analysing process 312 may report the result of said analyzing as an inactive status report ISR to an inactive status report analyze procedure ISRA 314. Procedure 314 evaluates the communicated status report ISR and decides whether the currently active firewall application should be replaced by one of the plurality of available inactive firewalls while at the same time the set of rules must be adapted to cope for any detected intrusion or corruption attempt. In one embodiment the set of rules is adapted by including a rule determining how to identify said intrusion or corruption attempt and how to react to said identified attempt. In one embodiment said rule may specify to drop, i.e. to delete without answering, network packets originating from an address that previously has sent such suspicious packets. Alternatively to just delete the suspicious packets they may be replied to by sending delusive packets. In this way said analyze process 312 may analyze inactive firewall application FW4 to identify an intrusion or corruption attempt and to retrofit the set of rules before another firewall application is set active.

If either the active system analyze process 311 or inactive system analyze process 312 identifies an attempt to intrude or corrupt firewall system 130, then a result based change request RBCR is communicated to process 211 to initiate an exchange of the currently active firewall, wherein the step of exchanging the active firewall application is performed after the rule set has been adapted corresponding to the identified intrusion or corruption attempt as described in the following.

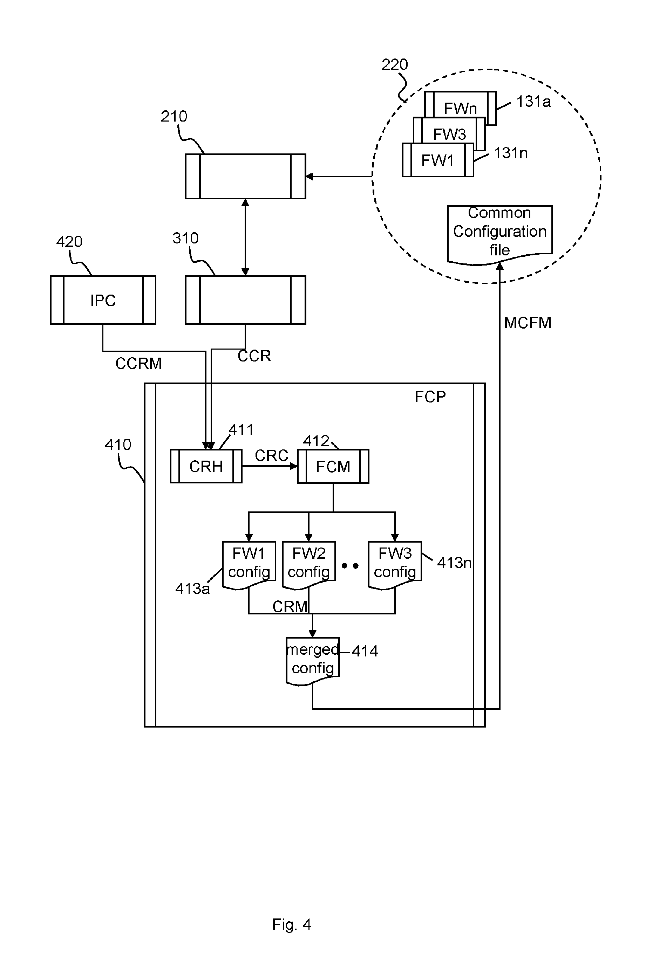

In addition to instructing the process 211 to initiate a firewall application exchange, the intrusion protection quality process IPQP 310 initiates a change in the rule set of the firewall applications by communicating a configuration change request CCR to a firewall configuration process 410 as depicted in figure 4. Upon receiving a change configuration request instruction automatic CCRA or a configuration change request manual, said configuration change request initiates the adaptation of the rule set in order to enable each firewall application to handle each identified intrusion or corruption attempt when said firewall application is set to active.

Said change configuration request is processed by change request handler 411, which communicates a change request command CRC to a firewall configuration management procedure FCM 412, which actually amends configuration files 413a..413n according to the amendments specified in the change request command. Each configuration file defines a rule set for one of the firewall applications. Note that these configuration files may differ in format and in content, since the firewall applications may be different and accordingly may detect different attempts of intrusion and corruption. In particular the firewall applications may be firewall applications as available from different manufacturers, which - as is known - differ in behaviour and require configuration files having different formats.

Due to the different manufacturers and the different algorithms, a firewall application of a first manufacturer accordingly may detect an attempt of intrusion or corruption whereas a firewall application of a second manufacturer may not detect that attempt, but may detect another attempt. Said detected attempt of an intrusion or corruption as detected by a firewall application of a first manufacturer may result in an adapted set of rules. Said amendment in the set of rules may be translated into rules for firewall applications from different manufacturers in order to enable these to cope with the attempt once identified by any of the firewall applications.

Amendments in the configuration files are then merged into merged configuration file 414, which in one embodiment of the invention can be performed by executing a change request merge CRM. Said merged configuration file 414 is then merged with or replaces the common configuration file, which defines the rules for inspecting ingress data for all firewall applications currently not active but available. Said processing of merged configuration file 414 can be performed by a merged configuration file management MCFM action to update the common configuration parameter file. Said updated common configuration parameter file is then deployed by all firewall applications thus providing the amended set of rules to each firewall application.

An identified intrusion or corruption attempt, which has been identified by a firewall application of a first manufacturer or which is found when analyzing an active firewall application or an inactive firewall application or a log file, may result in an amended rule set for all firewall applications comprised in firewall system 130. In this way properties of different firewall applications may be used advantageously to improve the rule set provided to all firewall applications comprised in firewall system 130.

In addition to automatically amending the set of rules as described above initiated by a config change request automatic CCRA, the set of rules can be amended manually via a user interface, which allows editing of the rule set. A corresponding user interface can be provided in one embodiment by intrusion protection commander functionality IPC 420. Said functionality may enable manual editing of the set of rules. Said function may initiate a corresponding change in the configuration files by passing a config change request manual command CCRM to change request handler 411, which may process said command similar as described above for a CCRA command. In addition to actually amending the set of rules all amendments are logged in a file.

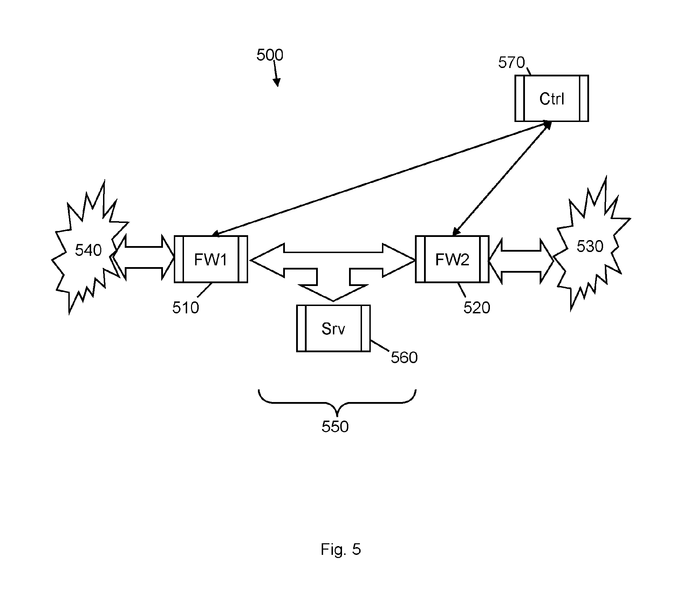

Figure 5 depicts a schematic 500 of another implementation of a firewall system, in which at least two firewall applications 510, 520 are active at the same time to protect a trusted network 530 from unauthorized access by a computer located in a public, untrusted network 540.

A first firewall application 510, which often is named outer firewall, inspects all data traffic originating from untrusted network 540, thus delimiting all public data communication from a zone 550 being located in terms of network architecture behind said first firewall. Said zone is furthermore delimited against trusted network 530 by a second firewall application 520, which inspects all data traffic between trusted network 530 and zone 550. In terms of network configuration zone 550 may be called a de-militarized zone.

Servers 560 located in zone 550 provide services that shall be accessible by untrusted network 540. Any computer located in untrusted network 540 may access a provided service and may accordingly communicate with servers 560, wherein the communication data is inspected by first firewall application 510. However, servers 560 are adapted and configured to prevent any direct forwarding of data to second firewall 520. Computers located in trusted network 530 may access any service provided in the untrusted network 540 by requesting these from servers 560, which in turn forward these requests to untrusted network 540 via firewall application 510. The data provided upon request by untrusted network 540 accordingly must pass firewall application 510, which inspects that data, and is provided to servers 560. Servers 560 in turn pass the requested data via second firewall application 520 to the requesting computer in trusted network 530, thus forming a so-called proxy-server for computers located in trusted network 530.

Any attempt for accessing trusted network 530 from a computer located in untrusted network 540 accordingly must overcome the first and the second firewall. In conventional systems using a so-called de-militarized zone the first and second firewalls are static, i.e. the first and second firewall do not alter their outer appearance.

In contrast thereto the firewall system described here is adapted and configured to exchange at least one of the first or second firewall applications as described above. Note that the firewall applications are communicatively and operatively coupled to control block 570, which may comprise the functionality and processes as described above. Control block 570 is located within trusted network 530.

In operation at least one of the firewall applications 510, 520 is exchanged either when a time interval expires or in case of a successful intrusion or corruption attempt as described above. Control of said at least one firewall application as well as control of the exchange operation as described above may be provided by control block 570, which shall be representative for the processes and functions described above, control block 570 thus providing all above described functionality.

In one embodiment only one of the firewall applications is exchanged as described above while the other firewall application shall be static. In one particular embodiment only the outer firewall application, i.e. firewall application 510, is exchanged as described above, while firewall application 520 is maintained static, i.e. not exchanged. In case an attempt to corrupt outer firewall application 510 is successful since the implementation of the morphing firewall reveals a leak that is exploited, then this weakness cannot be used to overcome inner firewall application 520. In an alternative embodiment outer firewall 510 may be maintained static while inner firewall 520 is exchanged as described above. In case outer firewall 510 is corrupted and an invader has gained unauthorized access to any server or system located in zone 550, the invader may start to attack inner firewall 520. However said attacking of the inner firewall is more complicated since the inner firewall application 520 is exchanged as described above.

In still another embodiment outer firewall application 510 as well as inner firewall application 520 are exchanged as described above, thus enabling the advantage of exchanging a firewall application at the outer firewall application as well as at the inner firewall application. Note that in one embodiment both firewall applications, i.e. inner firewall application 520 as well as outer firewall application 510, can be controlled by one instance of control block 570.

In one embodiment outer firewall application is a first firewall application and inner firewall application is a second firewall application, so the outer and the inner firewall differ in at least one property. Furthermore the set of rules of the outer firewall may differ from the set of rules of the inner firewall. Also, the outer firewall application may execute on a first operating system and the inner firewall application may execute on a second operating system.

In this way the idea of a morphing firewall system may also be applied to a firewall architecture comprising an outer and an inner firewall application.

## Claims

1. A method for protecting a first computer network from a second computer network comprising the method steps of
- executing at the same time a plurality of firewall applications comprising a first and second firewall application, wherein each firewall application is adapted and configured for inspecting data communicated between the first and second computer network according to a set of rules, and
- inspecting the communicated data by at least the first firewall application, said at least first firewall application thus being an active firewall application, and
- stopping the inspecting of the communicated data by the first firewall application, thus inactivating said first firewall application, and
- starting inspecting of the communicated data by the second firewall application when a time interval has expired or the set of rules is amended, thus activating said second firewall application.

2. The method of claim 1, wherein at least one of the plurality of firewall applications returns an informal message to a sender of data, if said data is rejected by the firewall application, and wherein the informal messages exhibit different characteristics.

3. The method of any preceding claim further comprising the step of analyzing at least one of a log file produced by the active firewall application or a rule set of the active firewall application.

4. The method of any preceding claim further comprising the step of analyzing at least one of a log file produced by a firewall application before being inactivated or a rule.

5. The method of preceding claims 3 or 4 further comprising the step of amending the set of rules.

6. The method of any preceding claim further comprising the step of inspecting communicated data by a second firewall application.

7. The method of any preceding claim further comprising the step of buffering ingress data.

8. The method of claim 7 wherein said step of buffering ingress data is performed when stopping inspection by said first firewall application and until starting inspection by said second firewall application.

9. The method of any preceding claim wherein said first firewall application is executed on a first operating system and said second firewall application is executed on a second operating system.

10. A digital processing system configured and adapted for protecting a first computer network from a second computer network, said digital processing system comprising
- means for executing a plurality of firewall applications comprising a first and a second firewall application at the same time, wherein each firewall application is adapted and configured for inspecting data communicated between the first and second computer network according to a set of rules,
- means for inspecting the communicated data by the first firewall application, said first firewall application thus being an active firewall application, and
- means for stopping the inspecting of the communicated data by the first firewall application, thus inactivating said first firewall application, and
- means for starting inspecting of the communicated data by the second firewall application when a time interval has expired or the set of rules is amended, thus activating said second firewall application.

11. The system of claim 10, wherein at least two firewall applications return informal messages to a sender of network data, if said data is rejected by the firewall application, and wherein the informal messages exhibit different characteristics.

12. The system of any preceding claim 10 to 11 further comprising
means for analyzing at least one of a log file produced by the active firewall application or the set of rules of the active firewall application.

13. The system of any preceding claim 10 to 12 further comprising means for analyzing at least one of a log file produced by a firewall application before being inactivated.

14. The system of any preceding claim 10 or 13 further comprising means for amending the set of rules.

15. The system of any preceding claim 10 to 14 further comprising means for inspecting communicated data by a second firewall application.

16. The system of any preceding claim 10 to 15 further comprising a buffer for buffering ingress data.

17. The system of any preceding claim 10 to 16 further comprising means for buffering ingress data when stopping inspection by said first firewall application.

18. The system of any preceding claim 10 to 17 further comprising means for executing said first firewall application on a first operating system and said second firewall application on a second operating system.
